# EUROPÄISCHE PATENTSCHRIFT

(11) **EP 0 524 347 B1**
(45) Veröffentlichungstag und Bekanntmachung des Hinweises auf die Patenterteilung: **05.07.1995**
(21) Anmeldenummer: 91122143.0
(22) Anmeldetag: 23.12.1991
(51) Int. Cl.: H02M 3/158

(54) **Verfahren zum Steuern eines Feldeffekttransistors sowie Anordnung und Anwendung**
Control method for a field-effect transistor, its arrangement and its application
Méthode de commande d'un transistor à effet de champ, sa disposition et son application

(30) Priorität: 15.07.1991 DE 4123386
(43) Veröffentlichungstag der Anmeldung: 27.01.1993
(73) Patentinhaber: ANT Nachrichtentechnik GmbH, D-71522 Backnang (DE)
(72) Erfinder: Ruppricht, Heike, Dipl.-Ing. (BA), W-7150 Backnang (DE); Ohms, Franz, Dipl.-Ing., W-7163 Oberrot (DE)

(56) Entgegenhaltungen:
- EP-A- 0 184 963
- EP-A- 0 257 404
- DE-A- 3 422 777
- US-A- 3 617 906

## Beschreibung

Die Erfindung geht aus von einer Anordnung zum Steuern eines im Schaltbetrieb arbeitenden Feldeffekttransistors, insbesondere eines Leistungs-MOSFETs für einen Tiefsetzsteller, wobei die Steuerung des Feldeffekttransistors in Abhängigkeit des über den Feldeffekttransistor in Rückwärtsrichtung fließenden Stromes vorgenommen wird und zwar derart, daß er abschaltet, wenn der in Rückwärtsrichtung fließende Strom gerade dem Wert Null zustrebt.

Bei einer Anordnung gemäß der DE 34 22 777 C2 ist ein in Rückwärtsrichtung betriebener Feldeffekttransistor vorgesehen, dem ein Stromwandler zur Erfassung des in Rückwärtsrichtung fließenden Stromes in Serie geschaltet ist. Die Sekundärwicklung dieses Stromwandlers ist mit einer Gegentakt-Ansteuerschaltung für den Feldeffekttransistor verbunden. Der Feldeffekttransistor wird als Gleichrichter für einen Sperrwandler oder Flußwandler verwendet. Durch die Ansteuerung des Feldeffekttransistors über den Rückwärtsstrom ist Dreiecksstrombetrieb (Lückbetrieb) des Schaltreglers möglich.

Aus der EP 257 404 A2 ist ein Schaltregler insbesondere in Form eines Buckreglers bekannt. Die Freilaufdiode ist dort durch einen FET ersetzt. Die Steuerung des Stellgliedes und des die Freilaufdiode ersetzenden FET erfolgt mit zueinander inversen Steuerpulsen, die in einer gemeinsamen Steuereinheit aufbereitet werden. Das Abschalten des Freilaufdioden-FET erfolgt, wenn die Spannung über dem FET nahezu Null ist. Die Steuereinheit arbeitet die Steuerimpulse aus der Differenz von Eingangs- und Ausgangsspannung des Buckreglers auf und zwar so, daß die Stromspitzenamplituden an der Schaltreglerinduktivität bei Eingangsspannungs- und Belastungsschwankungen konstant bleiben.

Um sicherzustellen, daß der Strom im Freilaufdioden-FET seine Richtung umkehrt bevor die Steuereinheit diesen FET abschaltet, ist eine Strombegrenzungsschaltung vorgesehen. Diese enthält einen weiteren FET parallel zum Freilaufdioden-FET und einen Serienwiderstand zur Auswertung der Spannung am Freilaufdioden-FET. Die ausgewertete Spannung wird einem Komparator zugeführt. Vor der Stromumkehr hält dieser Komparator das Gate des Freilaufdioden-FET leitend. Eine Verzögerungsschaltung am Ausgang des Komparators läßt einen gewissen Anstieg des nun umgekehrt fließenden Stromes durch die Schaltreglerinduktivität zu.

Aufgabe der Erfindung ist es, die Anordnung eingangs genannter Art so weiterzubilden, daß die Schaltverluste gering sind und Lückbetrieb insbesondere beim Einsatz für einen Tiefsetzsteller möglich ist. Diese Aufgabe wird durch die Merkmale des Anspruchs 1 gelöst. Die Ansprüche 2 und 3 zeigen Ausgestaltungen der Anordnung auf und Anspruch 4 eine vorteilhafte Verwendung.

Die Erfindung geht von der Erkenntnis aus, daß beim Abschalten des Feldeffekttransistors die geringsten Schaltverluste auftreten, wenn der Feldeffekttransistor gerade dann abgeschaltet wird, wenn der abklingende Rückwärtsstrom gerade den Wert Null erreicht. Die integrale Inversdiode kommt durch die Maßnahmen der Erfindung während des Ausschaltvorgangs des Feldeffekttransistors nicht zum Leiten und kann somit keine Verluste hervorrufen. Durch die Erfindung wird ein definiertes und schnelles Abschalten des Feldeffekttransistors ermöglicht. Die Nachteile der integralen Inversdiode des Feldeffekttransistors: große Rückwärtserholzeit, Abrißverhalten können sich nicht auswirken.

Die Steuereinrichtung für den Feldeffekttransistor läßt sich einfach und aufwandsarm aufbauen.

Anhand der Zeichnungen wird ein Ausführungsbeispiel der Erfindung nun näher erläutert. Es zeigen
Fig. 1 ein Prinzipschaltbild zur Ansteuerung eines Feldeffekttransistors nach der Erfindung
Fig. 2 ausgewählte Signalverläufe und
Fig. 3 eine weitere Anordnung zur Ansteuerung des Feldeffekttransistors.

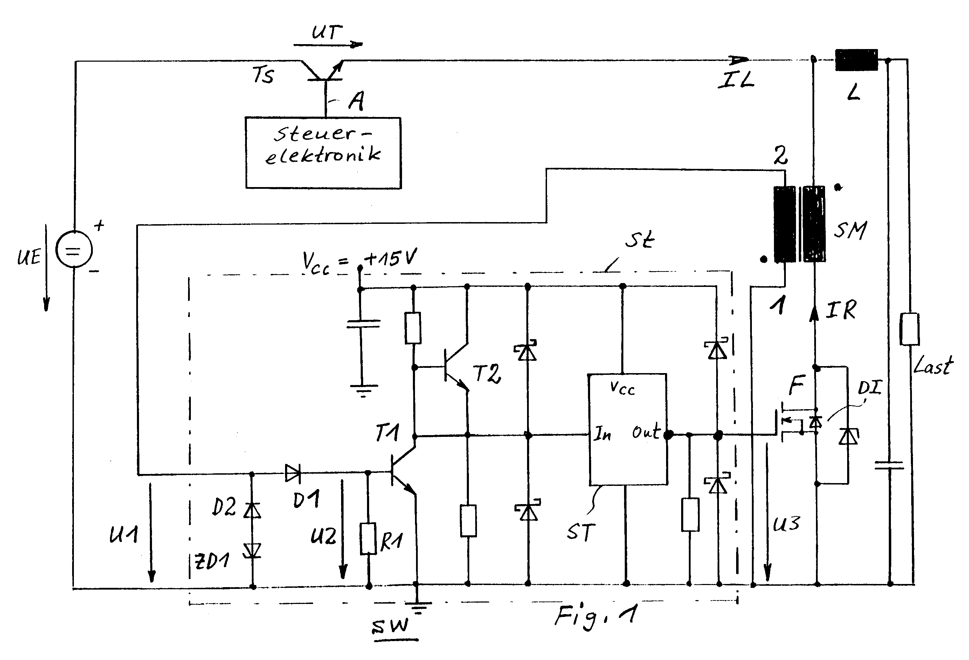

Das Ausführungsbeispiel nach Fig. 1 zeigt einen Feldeffekttransistor F in Form eines n-Kanal-Leistungs-MOSFET, welcher die Freilaufdiode im Freilaufkreis eines Tiefsetzstellers (Buckregler) nachbildet. Im Unterschied zur Verwendung einer Siliziumdiode als Freilaufdiode sind die Durchlaßverluste wesentlich geringer. Durch den physikalischen Aufbau bedingt ist jeder Leistungs-MOSFET in Rückwärtsrichtung eine leitende Diode. Diese integrale Inversdiode, in Fig. 1 mit DI bezeichnet, weist in der Regel das Verhalten einer sehr schlechten Diode auf: große Rückwärtserholzeit und das für Dioden typische Abrißverhalten. Um zusätzliche Verlustleistung durch die Inversdiode zu vermeiden (Ausschaltverluste), ist die erfindungsgemäße Anordnung so gewählt und dimensioniert, daß die Inversdiode möglichst nicht leitend wird, da sie durch die Sperrverzugszeit bei diesem Schaltvorgang die größten Verluste aufweist. Prinzipiell wäre es möglich, den als Diode eingesetzten MOSFET F mit dem invertierten Ansteuersignal A des Tiefsetzsteller-Stellgliedes - Transistor Ts - zu steuern. Diese Methode ist bei Lückbetrieb jedoch problematisch, da dort der Diodenstrom während der Lückzeit negativ werden würde.

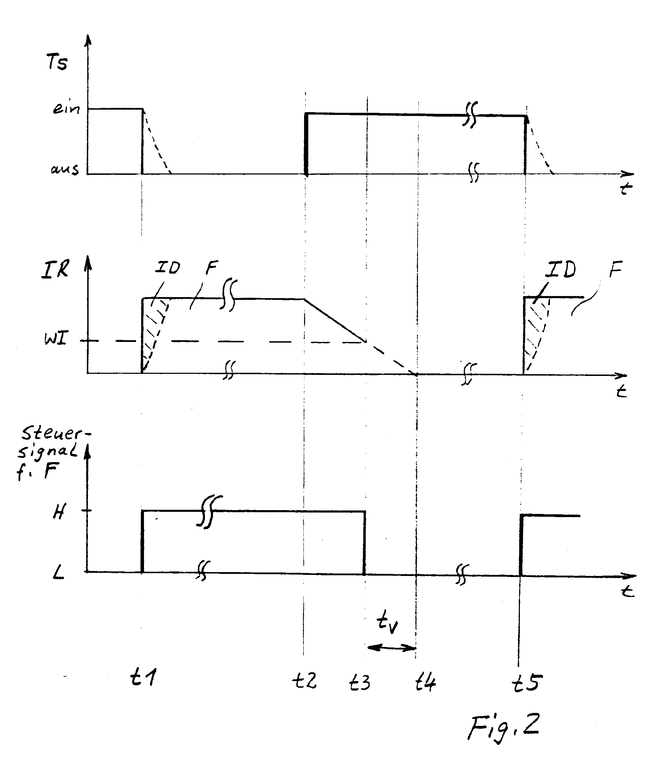

Bei der Erfindung wird der MOSFET F deshalb über eine eigene Steuereinrichtung St angesteuert. In Serie zur Drain-Source Strecke des MOSFET F ist ein Stromsensor - hier in Form des Strommeßwandlers SM - angeordnet. Das im Sekundärkreis des Strommeßwandlers SM auftretende stromproportionale Signal wird ausgewertet und der Steuereinrichtung St zur Aufbereitung eines Einschalt- und Ausschaltsteuersignals zugeführt. Es wird zunächst davon ausgegangen, daß der Stellgliedtransistor Ts leitend ist. Der MOSFET F ist nicht angesteuert. Über ihm liegt die Spannung UE - UT. Zum Zeitpunkt t1 wird der Transistor Ts durch seine Steuerelektronik gesperrt. Da sich der Strom IL durch die Induktivität L des Tiefsetzstellers nicht schlagartig ändern kann, kommutiert der ursprünglich über den Transistor Ts fließende Strom IL in den Freilaufkreis und die Inversdiode DI übernimmt diesen als in Rückwärtsrichtung über den MOSFET F fließenden Strom IR. Der fließende Strom IR wird als Schaltkriterium für den anzusteuernden MOSFET F genutzt. Die Inversdiode des MOSFET F ist zwar leitend bevor der MOSFET F angesteuert wird, die dadurch auftretende Verlustleistung ist jedoch gering. Der fließende Strom IR erzeugt an der Sekundärwicklung des strommeßwandlers SM eine Spannung U1, die über die Diode D1 gleichgerichtet und der Basis des npn Transistors T1 zugeführt wird. Dieser npn Transistor T1 in Emitterschaltung dient zur Pegelerhöhung und zur Entkopplung. Der ihm nachgeschaltete Emitterfolger T2 ist ebenfalls vom npn-Typ. Sein Ausgang führt auf den invertierenden Stromtreiber ST, realisiert durch den integrierten Baustein TSC 4429, dessen Ausgang direkt mit dem Gate des MOSFET F verbunden ist. Der mit dem Basis-Emitterwiderstand R1 beschaltete Transistor T1 hat auch die Funktion eines Schwellwertschalters SW, wobei der Schwellwert durch die Wahl des Widerstandes R1 einstellbar ist. Nach der Kommutierung des Stromes in den Freilaufkreis ist der Spannungsabfall U2 am Widerstand R1 so hoch, daß am Ausgang des Transistors L-Potential erscheint. Der invertierende Stromtreiber ST führt dann am Ausgang H-Potential und steuert den MOSFET F durch (Fig. 2). Der Strom IR fließt nun über den durchgeschalteten MOSFET F.

Wird der Stellglied-Transistor Ts zum, Zeitpunkt t2 über seine Steuerelektronik wieder leitend gesteuert, fließt der Strom IR zunächst über den durchgeschalteten MOSFET weiter, da dieser weiterhin über die Steuereinrichtung St im durchgeschalteten Zustand gehalten wird. Der Strom IR klingt jedoch ab dem Zeitpunkt t2 ab, da eine Kommutierung vom Freilaufkreis in den Stromkreis des Transistors Ts erfolgt. Die Inversdiode DI kann während des Kommutierungsvorganges nicht leitend werden, da der MOSFET F immer noch durchgesteuert ist. Ein Abschaltsteuersignal wird dem Gate des MOSFETs mit einem solchen Zeitvorhalt tᵥ zugeführt, daß er abschaltet, wenn der Strom IR gerade den Wert 0 erreicht. Dieser Zeitvorhalt tᵥ ergibt sich durch Verlängerung des abklingenden Stromes IR (in Fig. 2 gestrichelt) bis zum Schnittpunkt mit der Nullinie. Der Zeitvorhalt tᵥ berücksichtigt damit alle in der Steuereinrichtung auftretenden Signalverzögerungen.

Ein schnelles Ausschalten des MOSFET F ist zu erstreben, um die prinzipbedingte Stromspitze klein zu halten. Ein schnelles Ausschalten des MOSFET ist gleichzusetzen mit einem schnellen Einschalten des invertierenden stromtreibers ST. Um die Eingangskapazität des stromtreibers ST, beim eingesetzten stromtreiber TSC 4429 etwa 55 pF, schnell umladen zu können und damit die Signalverzögerung klein zu halten, ist der Impedanzwandler in Form des Emitterfolgers T2 vorgesehen.

Wie aus Fig. 2 ersichtlich, muß das Abschaltsteuersignal für den MOSFET F unter Berücksichtigung der Signallaufzeiten also schon zum Zeitpunkt t3 generiert werden und der dazugehörige stromproportionale Schwellwert WI mittels Widerstand R1 dementsprechend vorgegeben werden. Erreicht der abklingende Strom IR zum Zeitpunkt t3 den schwellwert WI, schaltet der Transistor T1 am Ausgang von L- auf H-Potential. Am Ausgang des invertierenden Stromtreibers ST erscheint dann L-Potential, der MOSFET F schaltet ab (Zeitpunkt t4, Strom IR = 0) und ist bis zum Zeitpunkt t5 (Wiedereinschalten des Transistors Ts) gesperrt. Zur Entmagnetisierung des Strommeßwandlers SM nach Beendigung des Freilaufstromes ist die Diode D2 und die Zenerdiode ZD1 vorgesehen. Der Entmagnetisierungsstrom fließt vom Endpunkt 1 der Sekundärwicklung des Strommeßwandlers SM über die Zenerdiode ZD1 und die Diode D2 zurück zum Endpunkt 2.

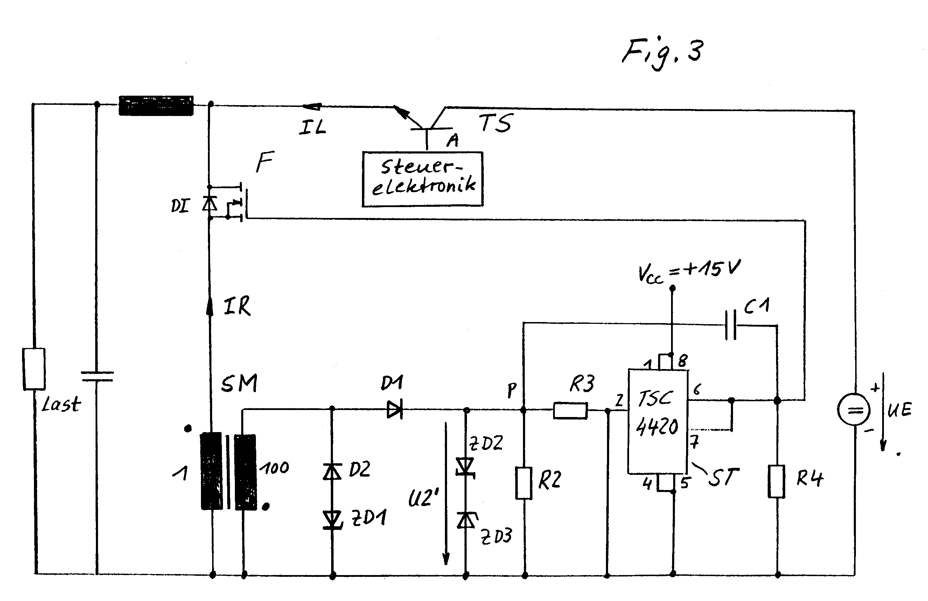

Ein weiteres Ausführungsbeispiel zur Ansteuerung des MOSFET F zeigt Fig. 3. Im Gegensatz zur Ausgestaltung gemäß Fig. 1 entfallen hier die Transistorstufen T1 und T2 zwischen dem Stromsensor SM in Form des Strommeßwandlers und dem eigentlichen Schwellwertschalter. Der mit dem Strommeßwandler SM erfaßte Strom IR wird wie beim Ausführungsbeispiel nach Fig. 1 durch die Diode D1 gleichgerichtet. Diese gleichgerichtete Spannung U2' wird durch die Antiparallelschaltung der beiden Zenerdioden ZD2, ZD3 auf beispielsweise 3,9 V begrenzt. Als Stromtreiber ST für den MOSFET F dient hier der integrierte Baustein TSC 4420. Die gleichgerichtete Spannung U2' wird dem Eingang 2 dieses Stromtreibers ST über den aus den Widerständen R2, R3 bestehenden Spannungsteiler zugeführt. Mit dem Widerstand R2 wird der Schwellwert für den Schwellwertschalter SW eingestellt. Die Zenerdiode ZD2 klemmt das Potential am Eingang 2 auf -0,2 V. Wenn die Spannung U2' die mit dem Widerstand R2 eingestellte Schaltwelle von beispielsweise 2V unterschreitet, ändert der Stromtreiber ST sein Ausgangspotential von H auf L.

Der Kondensator C1 zwischen Ausgang und Eingang des Stromtreibers ST dient zur Mitkopplung; d. h. bei Erreichen der Schaltwelle wird das Potential am Punkt P weiter abgesenkt, was die störsicherheit dieser Ausgestaltung erhöht. Der Widerstand R4 dient als schutzwiderstand für den MOSFET F.

Auch mit letzterer Realisierung läßt sich die Signalverzögerung genügend klein halten. Die Funktionsweise dieses Ausführungsbeispiels ist entsprechend den Erläuterungen zu Fig. 2.

Die meßtechnisch ermittelte Gesamtverzögerung zwischen Strom IR und Gate-Ansteuersignal U3 beträgt beim Einschalten des MOSFET 150 ns und beim Ausschalten 100 ns. Die Schaltfrequenz des Stelltransistors Ts wurde zu 25 kHz gewählt. Es ließ sich eine Wirkungsgradverbesserung von 1% gegenüber einem Tiefsetzsteller mit herkömmlicher Siliziumdiode als Freilaufdiode erzielen.

## Patentansprüche

1. Anordnung zum Steuern eines im Schaltbetrieb arbeitenden Feldeffekttransistors (F), insbesondere eines Leistungs-MOSFETs für einen Tiefsetzsteller, wobei die Steuerung des Feldeffekttransistors (F) in Abhängigkeit des über den Feldeffekttransistor (F) in Rückwärtsrichtung fließenden Stromes (IR) vorgenommen wird und zwar derart, daß er abschaltet, wenn der in Rückwärtsrichtung fließende Strom gerade dem Wert Null zustrebt mit folgenden Merkmalen:
- einem Stromsensor (SM) zur Auswertung des Stromes (IR) über dem Feldeffekttransistor (F),
- einer Steuereinrichtung (St), die nur das Signal des Stromsensors (SM) für die Aufbereitung des Steuersignals des Feldeffekttransistors (F) auswertet,
- einem Schwellwertschalter (SW) zwischen Stromsensor (SM) und Steuereinrichtung (St), dessen Schwellwert (WI) so gewählt ist, daß ein Abschaltsignal für den Feldeffekttransistor (F) mit einem solchen Zeitvorhalt (tv) generierbar ist, daß der Feldeffekttransistor (F) bei Strom Null ausschaltet.

2. Anordnung nach Anspruch 1, dadurch gekennzeichnet, daß als Schwellwertschalter (SW) mindestens eine Transistorstufe (T1, T2) mit nachgeschaltetem Stromtreiber (ST) vorgesehen ist.

3. Anordnung nach Anspruch 1, dadurch gekennzeichnet, daß als Schwellwertschalter (SW) ein schwellwertbestimmender Widerstand (R2) mit nachgeschaltetem Stromtreiber (ST) vorgesehen ist.

4. Verwendung der Anordnung nach Anspruch 1 im Freilaufkreis eines Tiefsetzstellers, wobei der in Rückwärtsrichtung betriebene Feldeffekttransistor (F) die Freilaufdiode ersetzt.

## Claims

1. Arrangement for the controlling of a field effect transistor (F), especially a power MOSFET for a buck regulator, working in switching operation, wherein the controlling of the field effect transistor (F) is carried out in dependence on the current (IR) flowing across the field effect transistor (F) in reverse direction and namely in such a manner that it switches off when the current flowing in reverse direction just tends towards the value zero, comprising the following features:
- a current sensor (SM) for evaluation of the current (IR) across the field effect transistor (F),
- a control device (St), which evaluates only the signal of the current sensor (SM) for the preparation of the control signal of the field effect transistor (F),
- a threshold value switch (Sw) between current sensor (SM) and control device (st), the threshold value (WI) of which is so selected that a switching-off signal for the field effect transition (F) can be generated with such a time lead (tv) that the field effect transistor (F) is switched off at the current zero.

2. Arrangement according to claim 1, characterised thereby that at least one transistor stage (T1, T2) with a downstream current driver (ST) is provided as threshold value switch (SW).

3. Arrangement according to claim 1, characterised thereby that a resistor (R2), which determines a threshold value, with a downstream current driver (ST) is provided as threshold value switch (SW).

4. Use of the arrangement according to claim 1 in the freewheel circuit of a buck regulator, wherein the field effect transistor (F) operated in reverse direction replaces the freewheel diode.

## Revendications

1. Dispositif pour commander un transistor à effet de champ (F) utilisé en commutation, en particulier un transistor à effet de champ MOS ou TECMOS de puissance pour un organe dévolteur, dispositif dans lequel la commande du transistor à effet de champ (F) est effectuée en fonction du courant (IR) circulant en sens inverse à travers ce transistor (F), de manière que celui-ci soit coupé ou rendu bloquant au moment précis où le courant circulant en sens inverse tend vers la valeur nulle, dispositif ayant les particularités suivantes:
- un capteur de courant (SM) est prévu pour exploiter le courant (IR) passant à travers le transistor à effet de champ (F),
- un dispositif de commande (St) est prévu pour exploiter uniquement le signal du capteur de courant (SM) en vue de la préparation du signal de commande du transistor à effet de champ (F),
- un interrupteur à seuil (SW) est prévu entre le capteur de courant (SM) et le dispositif de commande (St), interrupteur dont le seuil (WI) est choisi de manière qu'un signal de coupure ou de blocage du transistor à effet de champ (F) puisse être généré avec un temps d'avance (tv) tel que le transitor (F) devient bloquant quand le courant est nul.

2. Dispositif selon la revendicatgion 1, caractérisé en ce que, comme interrupteur à seuil (SW) on a prévu au moins un étage à transistor (T1, T2) à la suite duquel est monté un circuit d'attaque de courant (ST).

3. Dispositif selon la revendication 1, caractérisé en ce que, comme interrupteur à seuil (SW), on a prévu une résistance (R2) qui détermine le seuil et est suivie d'un circuit d'attaque de courant (ST).

4. Application du dispositif selon la revendication 1 dans le circuit de roue libre d'un organe dévolteur, dans lequel le transistor à effet de champ (F), utilisé en sens inverse, remplace la diode de roue libre.
